# FASCICULE DE BREVET EUROPEEN

(11) **EP 0 778 330 B1**
(45) Date de publication et mention de la délivrance du brevet: **06.05.1999**
(21) Numéro de dépôt: 96402619.9
(22) Date de dépôt: 04.12.1996
(51) Int. Cl.: C09K 11/08, C09K 11/59

(54) **Procédé de fabrication d'un luminophore**
Verfahren zur Herstellung eines Phosphors
Process for manufacturing a phosphor

(30) Priorité: 08.12.1995 FR 9514544
(43) Date de publication de la demande: 11.06.1997
(73) Titulaire: THOMSON-CSF, 75008 Paris (FR)
(72) Inventeur: Morell, Antoinette, Thompson-CSF SCPI, 94117 Arcueil Cedex (FR); Marx, Annie, Thompson-CSF SCPI, 94117 Arcueil Cedex (FR)

(56) Documents cités:
- WO-A-93/25630
- FR-A- 2 719 850

## Description

L'invention concerne un procédé de fabrication d'un luminophore et notamment d'un luminophore à base de silicate de zinc dopé manganèse émettant dans le vert et destiné aux écrans de visualisation.

Le développement rapide de nouveaux écrans pour la visualisation nécessite une adaptation et une mise au point de tous les composants et matériaux qui les constituent. C'est ainsi que les matériaux luminescents, appelés luminophores, responsables, sous l'effet d'une excitation d'électrons, photons ..., de l'émission d'une lumière dans le spectre visible doivent présenter des caractéristiques adaptées notamment en ce qui concerne la saturation dans la couleur considérée, la luminosité, le temps de déclin et la granulométrie.

La présente invention concerne un procédé de synthèse permettant d'obtenir un luminophore présentant simultanément les propriétés optiques et physico-chimiques requises pour son utilisation dans les écrans de visualisation. Le procédé concerne la synthèse de nombreux luminophores pour leur utilisation dans la réalisation d'écrans très performants.

Le procédé mis au point est applicable notamment à la fabrication d'un luminophore à base de silicate de formulation chimique générale Zn₂SiO₄:Mn. Sous l'effet d'une excitation par un rayonnement VUV (Vacuum UltraViolet) ce luminophore émet une lumière verte dont le point de couleur très saturé (peu de blanc) en fait un candidat de choix pour de nombreuses application comme par exemple la télévision par panneau à plasma.

Il est connu, dans la technique, comme divulgué dans le document WO-A-9 325 630, de réaliser un luminophore en mélangeant en milieu aqueux les matières constitutives du luminophore pour obtenir un mélange homogène. L'eau est ensuite évaporée. La poudre obtenue est tamisée puis cuite au four et à nouveau tamisée. Cependant, malgré tout le soin apporté à ces différentes opérations, les luminophores actuels ne donnent pas entièrement satisfaction.

En effet, dans les panneaux à plasma et pour certaines applications, le luminophore doit présenter un rendement lumineux élevé, des coordonnées trichromatiques (point de couleur) les plus saturées possibles, un temps de déclin inférieur à 10 ms et une répartition granulométrique très étroite (taille moyenne 2 à 3 µm) afin d'obtenir une très bonne définition des pixels et donc une très bonne résolution de l'écran.

L'invention concerne donc un procédé de fabrication d'un luminophore comprenant les étapes suivantes :
a) pesée des différents matériaux constituants en poudre ;
b) mélange en milieu aqueux;
c) évaporation du liquide;
d) tamisage de la poudre obtenue (ouverture de maille 100 µm) pour désagglomérer la poudre ;
e) cuisson à une température comprise entre 1 100°C et 1 400°C en atmosphère de gaz neutre ;
f) tamisage de la poudre cuite ;
g) broyage pour diminuer la taille des grains puis tamisage ;
caractérisé en ce que la cuisson en atmosphère de gaz neutre se fait avec injection de gaz neutre au coeur de la poudre et en ce qu'il comporte après l'étape de broyage, les étapes suivantes :
h) recuit de la poudre broyée à une température comprise entre 700 et 1 200°C de façon à obtenir une réorganisation des premières couches atomiques des grains de la poudre ;
i) mélange en milieu aqueux de la poudre recuite et sédimentation puis prélèvement de la partie supérieure du liquide contenant la poudre en suspension ;
j) séchage de la suspension prélevée et tamisage de la poudre restante.

Les différents objets et caractéristiques de l'invention apparaîtront plus clairement dans la description qui va suivre et dans les figures annexées qui représentent:
- la figure 1 une étape d'injection de gaz neutre dans la poudre en cours de traitement ;
- la figure 2, une courbe de répartition en volumes des tailles de grains d'un luminophore.

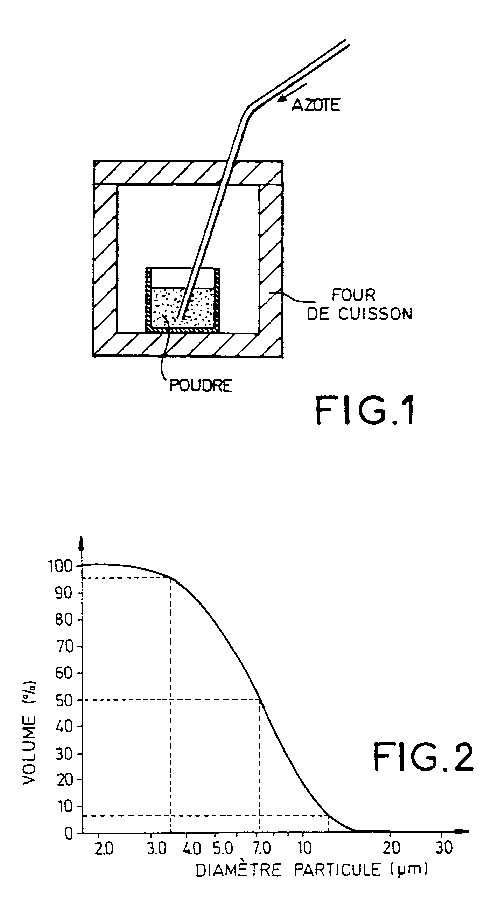

Le procédé de l'invention comporte les différentes étapes suivantes :
- pesée des différents matériaux entrant dans la composition du luminophore et mélange de ces matériaux sous forme de poudre dans une solution aqueuse de façon à obtenir un mélange homogène. Pour obtenir du silicate de zinc dopé manganèse, on mélange les produits suivants en poudre ZnO,SiO₂, sel de manganèse tel que MnSO₄ ou MnCO₃;
- évaporation de l'eau sous épiradiateurs et finitition du séchage du mélange dans une étuve à température avoisinant 100°C de façon à obtenir une poudre sèche ;
- tamisage à 100 µm de la poudre obtenue pour la désagglomérer ;
- la poudre tamisée est cuite dans un creuset (par exemple en alumine) à une température comprise entre 1 100°C et 1 400°C (1 280°C par exemple) pendant environ 4 heures. Durant la cuisson un gaz neutre, tel que de l'azote est injecté au coeur de la poudre à l'aide d'un tuyau qui plonge dans la poudre (voir figure 1). Les grains de poudre sont ainsi autant que possible cuit en atmosphère confinée d'azote. Il s'agit par ce moyen de réaliser un dopage manganèse au cours duquel le manganèse est dans un environnement qui, même faiblement oxygéné, peut conduire à la présence de manganèse en valeur qui est non luminescent. Par utilisation du dispositif présenté sur la figure 1, on augmente ainsi la luminance de luminophore ;
- la poudre cuite est à nouveau tamisée à l'aide d'un tamis dont la dimension des mailles est 100 µm ;
- pour diminuer la granulométrie (la taille des grains), on procède à un broyage de la poudre dans un mortier. On utilise pour cela par exemple un pilon et mortier en agathe et l'opération peut durer plusieurs heures (6 heures par exemple) ;
- la poudre broyée est à nouveau séchée puis tamisée ;
- on procède ensuite à un recuit de la poudre à une température comprise entre 700°C et 1 200°C (1 000°C par exemple) pendant environ 4 heures avec à nouveau injection directe d'azote au coeur de la poudre. Ce recuit a pour but de réorganiser les surfaces atomiques des grains car le broyage précédent a pu avoir pour effet de détériorer la surface des grains ;
- après ce recuit la poudre est à nouveau tamisée avec un tamis dont l'ouverture des mailles est d'environ 100 µm ;
- la poudre est mélangée dans un milieu aqueux et on procède à une sédimentation et à une récupération, par aspiration par exemple, du volume supérieur qui contient alors en suspension les grains les plus fins ;
- évaporation du liquide de la suspension récupérée, puis séchage et tamisage de la poudre obtenue.

Le luminophore obtenu du type Zn₂SiO₄:Mn présente les caractéristiques suivantes :
- rendement lumineux : le rendement est supérieur aux luminophores connus et correspond à 114 % des luminophores de même formulation générale commercialement disponibles. Mais ces luminophores connus ont un temps de déclin trop long (30 ms par exemple) et une granulométrie trop élevée (6,5 µm par exemple) ;
- coordonnées trichromatiques X = 0,25 Y = 0,70 ;
   - temps de déclin τ₁₀ = 6 ms ; le temps de déclin τ₁₀ étant le temps au bout duquel l'intensité maximale de l'émission chute d'un facteur 10 après coupure de toute excitation.
- taille moyenne des grains φₘ = 2,5 µm avec φ₉₅/φ₅ = 1,7/5,4
et dans laquelle φ₉₅/φ₅ représente les tailles de grains à 95 et 5 % en volume de la poudre. Le meilleur luminophore connu présente des grains avec φₘ = 6,5 µm et φ₉₅/φ₅ = 4,4/12. La figure 2 représente un exemple de répartition en volume des tailles de grains d'un luminophore dans lequel 95 % en volume (φ₉₅) est constitué de grains de 3,5 µm, 5 % (φ₅) est constitué de grains de 12 µm et un volume moyen φₘ est constitué de grains de 7,2 µm.

## Revendications

1. Procédé de fabrication d'un luminophore comprenant les étapes suivantes :
a) pesée des différents matériaux constituants en poudre ;
b) mélange en milieu aqueux;
c) évaporation du liquide ;
d) tamisage de la poudre obtenue à 100 µm ;
e) cuisson à une température comprise entre 1 100°C et 1 400°C en atmosphère de gaz neutre ;
f) tamisage de la poudre cuite ;
g) broyage pour diminuer la taille des grains puis tamisage ;
caractérisé en ce que la cuisson en atmosphère de gaz neutre se fait avec injection de gaz neutre au coeur de la poudre et en ce qu'il comporte après l'étape de broyage, les étapes suivantes :
h) recuit de la poudre broyée à une température comprise entre 700°C et 1 200°C de façon à obtenir une réorganisation des premières couches atomiques des grains de la poudre ;
i) mélange en milieu aqueux de la poudre recuite et sédimentation puis prélèvement de la partie supérieure du volume contenant la poudre en suspension ;
j) séchage du liquide de la suspension prélevée et tamisage de la poudre obtenue.

2. Procédé selon la revendication 1, caractérisé en ce que l'étape de recuit (h) se fait en atmosphère de gaz neutre.

3. Procédé selon la revendication 2, caractérisé en ce que l'étape de recuit se fait avec injection de gaz neutre au coeur de la poudre.

4. Procédé selon la revendication 1, caractérisé en ce que les matériaux utilisés dans la première étape sont ZnO, SiO₂, sel de manganèse (MnSO₄, MnCO₃ par exemple), et en ce que le luminophore est du Zn₂SiO₄ dopé manganèse.

5. Procédé selon l'une des revendications 1 à 3, caractérisé en ce que les gaz neutres sont de l'azote.

## Patentansprüche

1. Verfahren zur Herstellung eines Leuchtstoffs, das folgende Schritte enthält:
a) die verschiedenen pulverförmigen Bestandteile werden abgewogen;
b) dann werden sie in wässrigem Milieu gemischt;
c) man läßt die Flüssigkeit verdampfen;
d) das erhaltene Pulver wird auf 100 um Maschenweite gesiebt;
e) dann erfolgt eine Wärmebehandlung zwischen 1100 und 1400 °C in neutraler Gasatmosphäre;
f) das wärmebehandelte Pulver wird gesiebt;
g) das Pulver wird gemahlen, um die Korngröße zu verringern, und dann gesiebt;
dadurch gekennzeichnet, daß die Wärmebehandlung in neutraler Gasatmosphäre unter Einspeisung des neutralen Gases in das Zentrum des Pulvers erfolgt und daß das Verfahren nach dem Mahlen die folgende Schritte aufweist:
h) das gemahlene Pulver wird bei einer Temperatur zwischen 700 und 1200°C wärmebehandelt, sodaß sich eine Regeneration der ersten Atomschichten der Körner des Pulvers ergibt;
i) man mischt das wärmebehandelte Pulver in wässrigem Milieu und läßt es sich dann absetzen, worauf man den oberen Bereich der das Pulver in Suspension enthaltenden Flüssigkeit entnimmt;
j) man entfernt die Flüssigkeit aus der entnommenen Suspension und siebt das erhaltene Pulver.

2. Verfahren nach Anspruch 1, dadurch gekennzeichnet, daß der Verfahrensschritt (h) der Wärmebehandlung in neutraler Gasatmosphäre verläuft.

3. Verfahren nach Anspruch 2, dadurch gekennzeichnet, daß der Verfahrensschritt der Wärmebehandlung unter Einspeisung eines neutralen Gases in das Zentrum des Pulvers erfolgt.

4. Verfahren nach Anspruch 1, dadurch gekennzeichnet, daß die im ersten Verfahrensschritt verwendeten Materialien ZnO, SiO₂ und ein Mangansalz (beispielsweise MnSO₄, MnCO₃) sind und daß der Leuchtstoff mit Mangan dotiertes Zn₂SiO₄ ist.

5. Verfahren nach einem der Ansprüche 1 bis 3, dadurch gekennzeichnet, daß die neutralen Gase von Stickstoff gebildet werden.

## Claims

1. Process for manufacturing a phosphor, comprising the following steps:
a) weighing the various constituent materials in powder form;
b) mixing in an aqueous medium;
c) evaporating the liquid;
d) screening the powder obtained to 100 µm;
e) firing at a temperature of between 1100°C and 1400°C in a neutral-gas atmosphere;
f) screening the fired powder;
g) grinding to reduce the size of the grains, then screening;
characterized in that the firing in a neutral-gas atmosphere is carried out with injection of neutral gas at the core of the powder, and in that it includes the following steps after the grinding step:
h) annealing the ground powder at a temperature of between 700°C and 1200°C so as to obtain reorganization of the first atomic layers of the grains of the powder;
i) mixing the annealed powder in an aqueous medium and sedimenting then taking off the top part of the volume containing the powder in suspension;
j) drying the liquid of the suspension which is taken off and screening the powder obtained.

2. Process according to Claim 1, characterized in that the annealing step (h) is carried out in a neutral-gas atmosphere.

3. Process according to Claim 2, characterized in that the annealing step is carried out with injection of neutral gas at the core of the powder.

4. Process according to Claim 1, characterized in that the materials used in the first step are ZnO, SiO₂, manganese salt (MnSO₄, MnCO₃ for example), and in that the phosphor is manganese-doped Zn₂SiO₄.

5. Process according to one of Claims 1 to 3, characterized in that the neutral gases are nitrogen.
